Europäisches Patentamt

European Patent Office

Office européen des brevets

(19)

(11) Veröffentlichungsnummer : **0 504 304 B1**

(12) **EUROPÄISCHE PATENTSCHRIFT**

(45) Veröffentlichungstag der Patentschrift :
20.04.94 Patentblatt 94/16

(51) Int. Cl.$^5$ : **G01F 1/66**

(21) Anmeldenummer : **91902092.5**

(22) Anmeldetag : **13.12.90**

(86) Internationale Anmeldenummer :
**PCT/EP90/02178**

(87) Internationale Veröffentlichungsnummer :
**WO 91/09280 27.06.91 Gazette 91/14**

(54) **ULTRASCHALL-GAS-/FLÜSSIGKEITS-DURCHFLUSSMESSER.**

(30) Priorität : **15.12.89 DE 3941545**

(43) Veröffentlichungstag der Anmeldung :
**23.09.92 Patentblatt 92/39**

(45) Bekanntmachung des Hinweises auf die
Patenterteilung :
**20.04.94 Patentblatt 94/16**

(84) Benannte Vertragsstaaten :
**AT BE CH DE ES FR GB IT LI NL SE**

(56) Entgegenhaltungen :
**SIEMENS FORSCHUNGS-UND ENTWICK-
LUNGSBERICHTE, Band 15, Nr. 3, 1986, Springer Verlag, Berlin, DE; A.v.JENA:
"Ultraschallsensor für hochauflösende Durchflussmessung", Seiten 126-134
TECHNISCHES MESSEN, Band 56, Nr. 3, März
1989, R.Oldenbourg Verlag, München, DE;
K.S.MYLVAGANAM:
"Ultraschall-Durchflussmessung strömender
Gase unter niedrigem Druck für einen breiten
Messbereich", Seiten 112-115**

(73) Patentinhaber : **SIEMENS
AKTIENGESELLSCHAFT
Wittelsbacherplatz 2
D-80333 München (DE)**

(72) Erfinder : **RUSSWURM, Winfried
Dechbettenerstrasse 19a
D-8400 Regensburg (DE)**
Erfinder : **VON JENA, Alexander
Oskar-von-Miller-Ring 29
D-8000 München 2 (DE)**

Jouve, 18, rue Saint-Denis, 75001 PARIS

EP 0 504 304 B1

## Beschreibung

Die vorliegende Erfindung bezieht sich auf einen Ultrallschall-Durchflußmesser für Gase und/oder Flüssigkeiten wie im Oberbegriff des Anspruches 1 bzw des Anspruches 4 angegeben

Es sind Ultraschall-Durchflußmesser in Rohrform bekannt, in deren Rohrinnerem man Ultraschall schräg zur Strömungsachse v bzw. Rohrachse durch das dort strömende Gas bzw. durch die dort strömende Flüssigkeit hindurchtreten läßt, um die sich aus der Strömungsgeschwindigkeit ergebende Laufzeitänderung des Ultraschalls zu messen. Mit dem bekannten Wert für die Strömungsgeschwindigkeit kann aus dem Rohrquerschnitt und an sich bekannten Korrekturparametern die pro Zeiteinheit hindurchströmende Menge des Gases bzw. der Flüssigkeit ermittelt werden. Man sieht im Rohrinnern mehrfach reflektierte, schräg zur Rohrachse verlaufende Ultraschallwege, insbesondere in "W"-Form vor. Von einem in der Rohrwandung angeordneten Sendewandler wird der Ultraschallwandler schräg zur Rohrachse, auf die gegenüberliegende Rohrwand ausgerichtet, abgestrahlt, dort zur wiederum gegenüberliegenden Wand weiterreflektiert, nochmals an der dann wiederum gegenüberliegenden Wand reflektiert und schließlich auf den Empfangswandler hin weiterreflektiert. Der Einstrahlwinkel Alpha (= a) bestimmt die Länge eines derartigen W-förmigen Ultraschallweges vom Sendewandler zum Empfangswandler.

Es ist üblich einen solchen akustischen Schallweg im Rohrinneren abwechselnd in der einen und in der anderen Richtung von dem Ultraschall durchlaufen zu lassen, nämlich einmal mit der Strömungsrichtung und einmal entgegen der Strömungsrichtung des Mediums. Aus dem sich ergebenden Differenzsignal erhält man die entsprechende Größe für die Auswertung der volumenmäßigen Durchströmung des Rohres. Es wird angestrebt, möglichst lange Laufzeit für den Ultraschall im Verhältnis zur Länge des Durchflußmessers d.h. im Verhältnis zum Abstand zwischen Sendewandler und Empfangswandler zu haben. Für den Weg in Strömungsrichtung einerseits und für den Weg entgegen der Strömungsrichtung andererseits werden die Funktionen der zwei Wandler als Sendewandler und als Empfangswandler untereinander vertauscht.

Eine im Regelfall einzuhaltende Randbedingung ist, daß der z.B. durch Ausgestaltungen des Rohres im Bereich des Durchflußmessers verursachte Druckabfall einen bestimmten Wert nicht überschreitet und vorzugsweise auch leicht einstellbar ist.

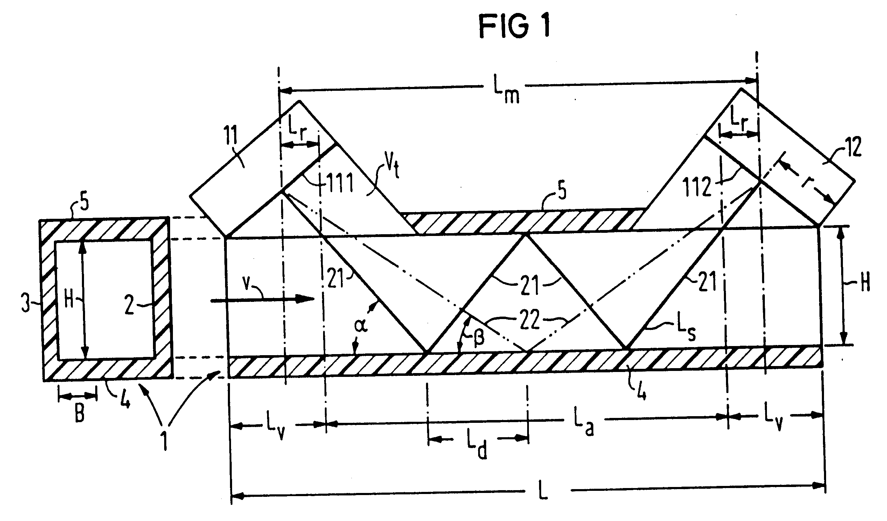

Es ist bereits ein Durchflußmesser vorgeschlagen worden, wie er aus der Fig. 1 und die Druckschrift Siemens Forsch. u. Entw. Berichte" Bd 15 (1986), No. 3, S 126-134 zu entnehmen ist.

Die Fig. 1 zeigt einen Längsschnitt durch ein Rohr 1 mit bekannter vierkantiger Form, das in Längsrichtung v vom zu messenden Medium durchströmt wird. Mit 4 und 5 sind die in der Fig. untere Seitenwand und obere Seitenwand des Rohres 1 bezeichnet. In die obere Seitenwand 5 sind die Wandler 11 und 12 eingesetzt, und zwar mit ihrer Sende- bzw. Empfangsfläche 111, 112 bzw. deren Orthogonalen schräg gerichtet zur Seitenwand 5 (wie dies die Fig. zeigt). Mit a ist der Winkel Alpha eines W-förmigen Ultraschallweges 21 zwischen den zwei Wandlern 11 und 12 bezeichnet. Die Flächen 111 und 112 sind so gerichtet, daß der Strahlweg 21 diese Flächen senkrecht trifft. Der Ultraschallstrahl wird auf seinem Weg zwischen den Wandlern 11 und 12 zweimal an der Seitenwand 4 und einmal an der Seitenwand 5 reflektiert. In Fig. 1 sind anders als in der obengennanten Druckschrift konventionelle Wandler gezeigt.

Bei einer solchen Anordnung ist es prinzipiell nicht zu vermeiden, daß ein Anteil akustischer Energie innerhalb der Strahlungskeule der Fläche 111 bzw. 112 in einem solchen Winkel abgestrahlt bzw. empfangen wird, der zu einem in der Fig. 1 zusätzlich eingetragenen V-förmigen Weg 22 im Rohrinneren des Rohres 1 führt. Der V-förmige Weg mit dem Winkel Beta (= b) hat eine andere Laufzeit als der gewünschte W-förmige Weg, der eine größere akustische Weglänge im Rohr 1 hat, als dies für den V-förmigen Weg der Fall ist.

Zur Minimierung des störenden Einflusses des V-förmigen Weges 22 ist in der Anmeldung WO 91/09282 vorgeschlagen worden, einen wie aus der obengenannten Druckschrift prinzipiell bekannten rechteckformigen Querschnitt des Vierkantrohres mit einer Höhe H und einer Breite B vorzusehen, wobei H jedoch größer 2 bis 15 x größer als B, insbesondere 5 bis 6 x B bemessen ist. Dieser so bemessene rechteckförmige Querschnitt dient einer weiteren Verbesserung der Homogenität der Ultraschall-Durchstrahlung des jeweils ganzen Querschnitts des im Meßrohr strömenden Mediums. Der Rechteckquerschnitt ist wesentlich verschieden von vielfach verwendeten Ultraschall-Durchflußmessern mit einem das mit breitem Querschnitt strömende Medium durchquerenden akustischen "Fadenstrahl".

Es ist eine Aufgabe der vorliegenden Erfindung, alternative bzw. zur vorgenannten Anmeldung zusätzliche Maßnahmen anzugeben, mit denen für den vorgegebenen Meßbereich eine (weitere) Minimierung des störenden Einflusses des parasitären Signals des V-förmiges Weges durch Verbesserung der Bedingungen für das Nutzsignal zu erreichen ist.

Diese Aufgabe wird mit den Merkmalen des Patentanspruches 1 bzw. denen des Anspruches 4 gelöst. Eine weitere Lösung ist der Anspruch 6 als Kombination der Ansprüche 1 und 4.

Die vorliegende Erfindung ist insbesondere für die Fälle geeignet, in denen die Strömungsgeschwindigkeit des Mediums im Rohrinneren nicht sehr viel kleiner als die physikalisch vorgegebene Schallgeschwindigkeit im selben Medium ist.

Bei der Erfindung ist vorgesehen, und zwar vergleichsweise zur Anordnung der Wandler nach Fig. 1, diese Wandler "fehlorientiert" anzuordnen. Eine Alternative der Erfindung besteht darin, den einen Wandler gegenüber dem anderen Wandler bezogen auf den W-förmigen Weg 21 der Fig. 1 in Axialrichtung des Rohres verschoben, d.h. versetzt, anzuordnen. Eine andere Alternative besteht darin, die Abstrahlflächen 111 oder 112 gegenüber der Anordnung nach Fig. 1 bzw. gegenüber dem dort angegebenen W-förmigen Weg 21 im Winkel verkippt zu orientieren. Eine dritte Alternative besteht in gemeinsamer Benutzung der beiden vorgenannten Alternativen. Diese Lösungen stehen mit noch einem weiteren Gedanken bzw. weiteren Vorteil in Verbindung, dem die Problematik zugrunde liegt, die sich bei gegenüber der Ultraschallgeschwindigkeit C nicht wesentlich kleinerer Strömungsgeschwindigkeit V des Mediums ergibt.

Der schräggerichtete Verlauf der Ultraschallstrahlung im strömenden Medium wird durch die Strömung in seiner Richtung "verweht". Dies führt dazu, daß bei einer Anordnung nach Fig. 1 nicht der orthogonal ausgesandte Zentrumsstrahl der Schallkeule der ausgesandten Ultraschallstrahlung diejenige Schallstrahlung ist, die den W-förmigen Weg in der wie in Fig. 1 dargestellten idealen Ausrichtung durchläuft. Entsprechendes gilt für den Empfang beim Empfangswandler. Dieses Phänomen führt dazu, daß bei einer Ultraschallmessung stromab, d.h. mit der Strömung, eine ganz erhebliche Dämpfung bzw. Verringerung des Empfangssignals festzustellen ist, nämlich vergleichsweise zur Ultraschallmessung stromauf und im ruhenden Medium. Das Signal kann bis zur Größe parasitärer Signale herabgedrückt sein.

Im Regelfall werden die Strömungsmesser in solchen Anlagen verwendet, in denen die Strömungsrichtung des Mediums festliegt und die Strömungsgeschwindigkeit zwischen dem Wert Null und einem Maximalwert liegt, sich der Vektor der Strömungsgeschwindigkeit aber nicht umkehrt. Für solche Anlagen liefert die vorliegende Erfindung außer der Minimierung des parasitären Signals des an sich nicht zu vermeidenden V-förmigen Weges außerdem auch eine Egalisierung der Empfangssignale für die Messungen mit stromab und mit stromauf gerichtetem Ultraschall (zur Gewinnung des auszuwertenden Differenzsignals).

Mit der Erfindung ist sogar zu erreichen, daß auch in solchen Fällen noch zuverlässig gemessen werden kann, in denen bei einer Anordnung nach Fig. 1 und entsprechend geringem Geschwindigkeitsunterschied von Ultraschall und Strömung voneinander stromab das Empfangssignal so geschwächt wird, daß eine brauchbare Messung fast unmöglich ist.

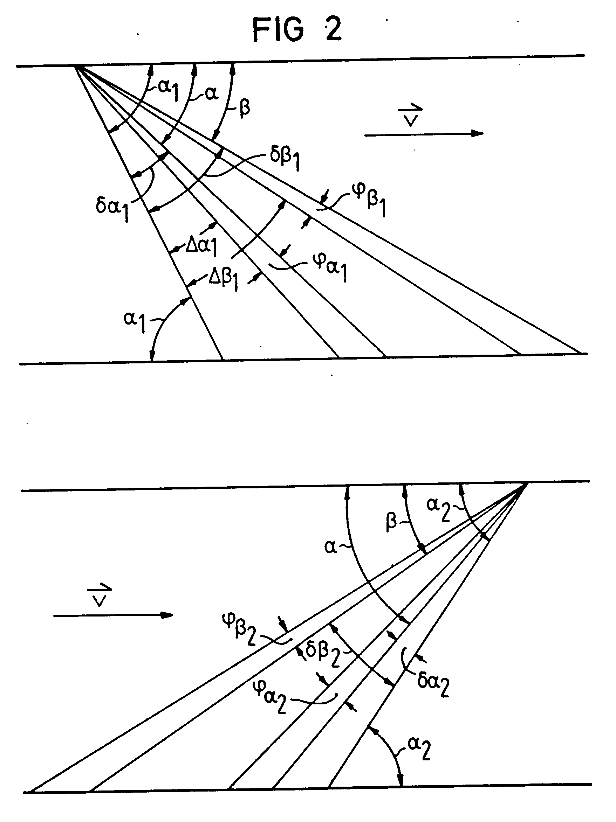

Nachfolgend wird eine mathematisch-physikalische Erläuterung zur Erfindung gegeben, wobei als erstes die Meßrohrgeometrie behandelt wird, und zwar unter Zuhilfenahme der schon beschriebenen Figur 1 und der Fig. 2a und 2b. Fig. 2a zeigt die an dem in Strömungsrichtung abstrahlenden Ultraschallwandler auftretenden relevanten Strahlungswinkel und Fig. 2 das entsprechende für den entgegen der Strömungsrichtung abstrahlenden Ultraschallwandler. Unter 2) ist dann die Abstrahlcharakteristik erörtert und unter 3) wird eine qualitative Betrachtung der Richtungsfunktion gegeben, und zwar

a) für aufeinander ausgerichtete Wandler des Systems der Fig. 1 bzw. der obengenannten anderen Anmeldung,

b) für erfindungsgemäß axial versetzte Wandler entsprechend der einen Alternative und

c) für gegeneinander verkippte Wandler entsprechend der zweiten Alternative der Erfindung.

## 1. Meßrohrgeometrie

Bild 1 zeigt den Aufbau eines geradlinig durchstromten Meßrohres in "W"-Anordnung mit seitlich montierten, aufeinander ausgerichteten Wandlern. Die Entfernung beider Wandlermittelpunkte wird mit $L_m$ bezeichnet. Der geneigt zur Strömungsrichtung laufende Strahl wird hier zur Weg- und Laufzeitverlängerung dreimal an Boden- und Deckplatte des Rohres reflektiert ("W"-Anordnung). Näheres siehe /4/.

Für nicht aufeinander ausgerichtete Wandler sind die verschiedenen auftretenden Winkel für beide Wandler in Bild 2 dargestellt. Die Einstrahlwinkel in den Strömungskanal werden mit $\alpha_k$ (k=1,2) bezeichnet. Die Anordnung erfolgt so, daß der durch drei Reflexionen charakterisierte Schallweg bevorzugt wird. Da die Wandler nicht aufeinander ausgerichtet sind, beträgt der effektive Winkel $\alpha$ des "W"-Schallweges

$$\tan\alpha = \frac{4h + r(\cos\alpha_1 + \cos\alpha_2)}{L_m} \quad (1)$$

mit r Wandlerradius (für beide Wandler gleich) und h Meßrohrhöhe. Für den parasitären, "V"-Schallweg ergibt sich der effektive Winkel $\beta$

$$\tan\beta = \frac{2h + r(\cos\alpha_1 + \cos\alpha_2)}{L_m} \quad (2)$$

Die wirksame Strömungsgeschwindigkeit $v_{eff}$ beträgt

EP 0 504 304 B1

$$v_{eff} = \bar{v} \cdot \cos\alpha \quad (3)$$

mit $\alpha$ als dem Winkel zwischen Strömungs- und Abstrahlrichtung und $\bar{v}$ als über den Schallweg gemittelter Strömungsgeschwindigkeit. Mit dem Volumenstrom dV/dt (F = h*b, F Querschnittsfläche, h und b = Höhe und Breite) hängt $\bar{v}$ zusammen:

$$\dot{V} = \bar{v} \cdot F \quad (4)$$

Die erzielbare Laufzeitdifferenz (siehe /1/,/2/) für den "W"-Schallweg ist:

$$\Delta t = \frac{8 \cdot h \cdot \bar{v} \cdot \cot\alpha}{c^2} \quad (5)$$

Die Winkeldifferenzen der Abstrahlwinkel des jeweiligen Schallweges zur Normalenrichtung der Wandler werden wie folgt definiert

$$\delta\alpha_1 = \alpha - \alpha_1 \text{ für Wandler 1 und "W"-Schallweg}$$
$$\delta\alpha_2 = \alpha - \alpha_2 \text{ für Wandler 2 und "W"-Schallweg}$$
$$\delta\beta_1 = \beta - \alpha_1 \text{ für Wandler 1 und "V"-Schallweg}$$
$$\delta\beta_2 = \beta - \alpha_2 \text{ für Wandler 2 und "V"-Schallweg} \quad (6)$$

Da im allgemeinen $\beta < \alpha$ und $\alpha_k > \beta$ ist, gilt auch

$$\delta\beta_k < \delta\alpha_k \text{ bzw. } \delta\beta_k < 0 \quad (7)$$

Durch den in /2/ ausführlich dargestellten Mitführungseffekt bei abgewinkeltem Meßweg tritt bei Strömung eine Strahlabdrift und damit eine strömungsgeschwindigkeits- und -richtungsabhängige Winkeländerung $\varphi$ ein. Diese Änderung läßt sich für den jeweiligen Wandler und Schallweg näherungsweise beschreiben /2/ mit

$$\varphi_{\varepsilon k} \approx \frac{v}{C} \sin\varepsilon_k \text{ mit } \varepsilon = \alpha, \beta \text{ und } k = 1,2 \text{ (Bogenmaß)} \quad (8)$$

Damit ergibt sich bei Strömung die Winkeldifferenz zur Wandlernormalen für den jeweiligen Schallweg bei Abstrahlung zu

$$\Delta\alpha_1 = \alpha - \alpha_1 + \varphi_{\alpha 1} \text{ für Wandler 1 und "W"-Schallweg}$$
$$\Delta\alpha_2 = \alpha - \alpha_2 + \varphi_{\alpha 2} \text{ für Wandler 2 und "W"-Schallweg}$$
$$\Delta\beta_1 = \beta - \alpha_1 + \varphi_{\beta 1} \text{ für Wandler 1 und "V"-Schallweg}$$
$$\Delta\beta_2 = \beta - \alpha_2 + \varphi_{\beta 2} \text{ für Wandler 2 und "V"-Schallweg} \quad (9)$$

## 2. Abstrahlcharakteristik

Die Ultraschallwandler sind prinzipiell beschreibbar als kreisförmige Kolbenmembranen. Die Richtcharakteristik ist abhängig von der Wellenzahl k und dem Wandlerdurchmesser r. Daraus ergibt sich eine u.a. vom Winkel zur Wandlernormalen abhängige Funktion für den in die jeweilige Richtung abgestrahlten Schalldruck (siehe /3/). Die Abstrahlcharakteristik enthält eine Hauptkeule ohne Nebenkeulen. Diese Richtungsfunktion sei hier mit $F(\Delta\varepsilon_k)$ mit $\varepsilon = \alpha, \beta$ und $k=1,2$ bezeichnet mit den prinzipiellen Eigenschaften

$$dF/d\Delta\varepsilon_k = 0 \text{ für } \Delta\varepsilon_k = 0, \text{ Maximum mit } F = 1$$
$$dF/d\Delta\varepsilon_k > 0 \text{ fur } \Delta\varepsilon_k < 0$$
$$dF/d\Delta\varepsilon_k < 0 \text{ fur } \Delta\varepsilon_k > 0$$
$$\text{fur } \varepsilon = \alpha, \beta \text{ und } k = 1,2 \quad (10)$$

Fur den am Empfangswandler wirksamen Schalldruck $p_{xy}$ (xy=12, 21) lassen sich für beide Meßrichtungen $1\rightarrow 2$ und $2\rightarrow 1$ und Schallwege folgende Beziehungen angeben:

$$p_{12} = R \, F(\Delta\varepsilon_1) \, F(\delta\varepsilon_2) \, D_{12}(v) \qquad \varepsilon = \alpha, \beta$$
$$p_{21} = R \, F(\Delta\varepsilon_2) \, F(\delta\varepsilon_1) \, D_{21}(v) \quad (11)$$

Wobei R eine die Halbkugelwelle beschreibende Funktion ist, die für beide Richtungen gleich sein soll. $D_{xy}(v)$ ist eine bisher nicht bekannt gewesene von der Strömungsgeschwindigkeit und -richtung abhängige, zusätzliche Dämpfung beschreibende und für beide Meßrichtungen verschiedene Funktion. Der Empfangswandler sieht das eintreffende Signal strömungsunabhängig immer unter dem gleichen Winkel $\delta\varepsilon_k$ /2/, deshalb hier $\Delta\varepsilon_k = \delta\varepsilon_k$. Für ruhendes Medium wird beim Sendewandler $\delta\varepsilon_k = \Delta\varepsilon_k$ und $D_{12}(0) = D_{21}(0)$, d.h. nach (11) $p_{21} = p_{12}$, was zu erwarten ist.

## 3. Qualitative Betrachtung der Richtungsfunktion im "W"-Meßrohr

a) Aufeinander ausgerichtete Wandler (Fig 1).

Hierfür gilt $\alpha = \alpha_1 = \alpha_2$ und (7), sowie entsprechend (1) und (2). Die Winkelbeziehung zwischen dem "W"-Schallweg und dem "V"-Schallweg wurde bereits in /4/ abgehandelt. Im Weiteren wird vereinbart, daß F mit z(zero) und f(full) für ruhendes Medium respektive maximale Strömungsgeschwindigkeit indiziert wird und daß $1\rightarrow 2$ die Strömungsrichtung darstellt. Es gilt bei ruhendem Medium (6), (7) und (10) und damit $F_Z(\Delta\beta_1)F_Z(\delta\beta_2) < F_Z(\Delta\alpha_1)F_Z(\delta\alpha_2)$ mit $F_Z = 1$ für den "W"-Schallweg.

4

Für den "W"-Schallwes $1 \rightarrow 2$ wird bei Strömung $\Delta\alpha_1 > 0$, $d\Delta\alpha_1 > 0$ wegen (8) und $v > 0$, mit (9) $dF < 0$ und damit $F_f(\Delta\alpha_1) < F_z(\Delta\alpha_1)$. Für den "V"-Schallweg bleibt $\Delta\beta_1 < 0$, $d\Delta\beta_1 > 0$, mit (9) $dF > 0$ und damit $F_f(\Delta\beta_1) > F_z(\Delta\beta_1)$.

Für den "W"-Schallweg $2 \rightarrow 1$ wird $\Delta\alpha_2 < 0$ (wegen Vorzeichen von v, $v < 0$), $d\Delta\alpha_2 < 0$, mit (9) $dF < 0$ und damit $F_f(\Delta\alpha_2) < F_z(\Delta\alpha_2)$. Für den "V"-Schallweg bleibt $\Delta\beta_2 < 0$, $d\Delta\beta_2 < 0$, mit $dF < 0$ dann $F_f(\Delta\beta_2) < F_z(\Delta\beta_2)$.

Das bedeutet, daß in beiden Meßrichtungen bei Strömung Abstrahlrichtungen wirksam werden, die bei $F < 1$ liegen, daher nimmt die Signalamplitude ab. Die "V"-Signalamplitude nimmt in Stromabwärtsrichtung zu, in der anderen Richtung ab. Zusätzlich wird im Experiment $D_{12} > D_{21}$ beobachtet, damit kann mit (11) in Stromabwärtsrichtung durch den gegenläufigen Amplitudenverlauf das "V"-Signal das Nutzsignal bis zur Unauswertbarkeit überlagern, wie es in der Praxis auch auftritt. Fur das "W"-Signal läßt sich schreiben nach (11)

$$F_f(\Delta\alpha_1)F(\delta\alpha_2)D_{12}(v_f) \; < \; \underbrace{F_f(\Delta\alpha_2)F(\delta\alpha_1)D_{21}(v_f)}_{} \; < \; \underbrace{F_z(\delta\alpha_1)F_z(\delta\alpha_2)D(0)}_{} \qquad (12)$$
$$\underbrace{\phantom{F_f(\Delta\alpha_1)F(\delta\alpha_2)D_{12}(v_f)}}_{\text{stromabwärts max.}} \qquad \text{stromaufwärts max.} \qquad \text{ruhendes Medium}$$

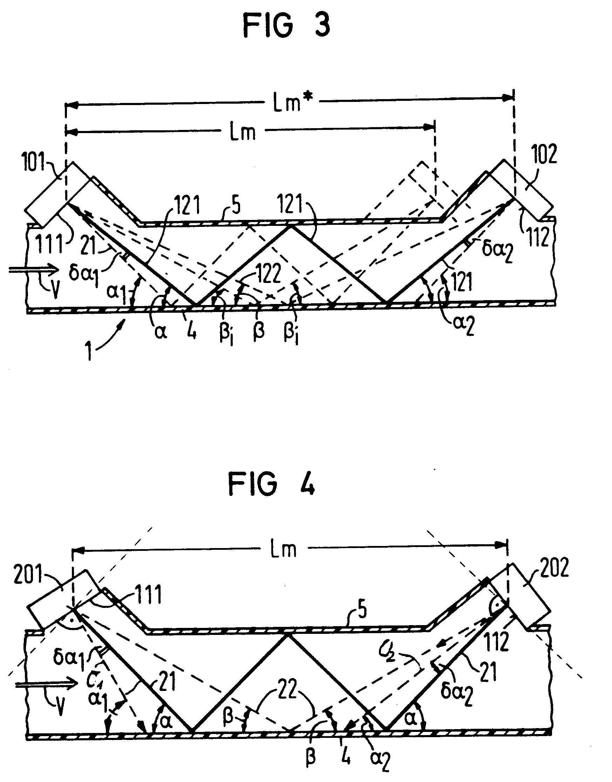

b) Axial versetzte Wandler (Fig 3).

Hier gilt $\beta < \alpha$ und $\alpha_1 = \alpha_2 > \alpha$, d.h. $\delta\beta_k < \delta\alpha_k < 0$ und entsprechend (1) und (2). Es wurden abweichend von Anordnung a) bei gleichem Einstrahlwinkel die beiden Wandler weiter voneinander entfernt, sind also nicht mehr aufeinander ausgerichtet. Bei ruhendem Medium ist nach (10) $F_z(\Delta\beta_1)F_z(\delta\beta_2) < F_z(\Delta\alpha_1)F_z(\delta\alpha_2)$.

Unter der Voraussetzung $|\delta\alpha_k| > |\varphi_{\alpha k}|$ bleibt bei Strömung für den "W"-Schallweg $1 \rightarrow 2$ $\Delta\alpha_1 < 0$, $d\Delta\alpha_1 > 0$, mit (9) $dF > 0$ und damit $F_f(\Delta\alpha_1) > F_z(\Delta\alpha_1)$. Für den "V"-Schallweg bleibt $\Delta\beta_1 < 0$, $d\Delta\beta_1 > 0$, mit (9) $dF > 0$ und damit $F_f(\Delta\beta_1) > F_z(\Delta\beta_1)$.

Für den "W"-Schallweg $2 \rightarrow 1$ bleibt $\Delta\alpha_2 < 0$ (wegen Vorzeichen von v), $d\Delta\alpha_2 < 0$, mit (9) $dF < 0$ und damit $F_f(\Delta\alpha_2) < F_z(\Delta\alpha_2)$. Für den "V"-Schallweg bleibt $\Delta\beta_2 < 0$, $d\Delta\beta_2 < 0$, mit $dF < 0$ dann $F_f(\Delta\beta_2) < F_z(\Delta\beta_2)$.

Das "W"-Signal wird also bei ruhendem Medium nicht mit $F_z = 1$ abgestrahlt. In Meßrichtung $1 \rightarrow 2$ werden mit zunehmender Strömung Abstrahlrichtungen mit $F_f > F_z$ wirksam. In der Gegenrichtung nimmt die Amplitude für den "W"-Schallweg allerdings weiter ab. Die Amplitude für den "V"-Schallweg wird in Stromabwärtsrichtung größer, in der Gegenrichtung kleiner, ist aber schon bei $v = 0$ kleiner als bei a). Da bei Strömung die "W"-Amplitude bei $1 \rightarrow 2$ zunimmt, andersrum dagegen ab, kann bis zu einem gewissen Maß $D_{12} > D_{21}$ kompensiert werden. Dadurch wird ein gewisser Ausgleich der Amplitudenunterschiede der beiden Laufzeitsignale bei Strömung erreicht. Durch die "Aufwertung" des Stromabwärts-"W"-Signals kann eine bessere Auswertbarkeit des "W"-Signals erreicht werden. Für das "W"-Signal läßt sich nach (11) bei günstigem $\alpha_k$ schreiben

$$F_f(\Delta\alpha_1)F(\delta\alpha_2)D_{12}(v_f) \; \approx \; \underbrace{F_f(\Delta\alpha_2)F(\delta\alpha_1)D_{21}(v_f)}_{} \; < \; \underbrace{F_z(\delta\alpha_1)F_z(\delta\alpha_2)D(0)}_{} \qquad (13)$$
$$\underbrace{\phantom{F_f(\Delta\alpha_1)F(\delta\alpha_2)D_{12}(v_f)}}_{\text{stromabwärts max.}} \qquad \text{stromaufwärts max.} \qquad \text{ruhendes Medium}$$

Die unter a) und b) beschriebenen Anordnungen sind spiegelsymmetrisch bezüglich der Ebene senkrecht zum halben Abstand der Wandler und arbeiten deshalb für beide Strömungsrichtungen $1 \rightarrow 2$ und $2 \rightarrow 1$ gleich gut, d.h. der auswertbare Bereich für Strömungsgeschwindigkeiten ist $-v_f < v < +v_f$, also $\Delta v = 2v_f$.

c) Gegeneinander verkippte Wandler (Fig 4).

Die Hauptströmungsrichtung soll entsprechend den überwiegenden Anwendungen $1 \rightarrow 2$ sein, in der Gegenrichtung soll die Utraschallübertragung nicht gänzlich versagen, sich aber nur bis zu wesentlich geringeren Strömungsgeschwindigkeiten durchführen lassen, um in der Praxis auftretende kleine Rückströmungen oder Fluktuationen um den Nullpunkt bei geringem Fluß noch gut erfassen zu können. Deshalb soll eine Anordnung gefunden werden, die die Beziehung $\Delta v = 2v_f$ beibehält, mit $\eta < v_f$ und $-v_f + \eta < v < +v_f + \eta$ einen größeren Meßbereich in der Hauptströmungsrichtung erlaubt. Das bedeutet, daß durch gegeneinander verkippte Wandler die Symmetrieebene wegfällt und die o.g. Verbesserung der Ubertragung erreicht werden kann.

Die Wandler befinden sich in der Entfernung $L_m$ und strahlen mit den Normalenwinkeln $\alpha_1$ und $\alpha_2$ ins Rohr, wobei sein soll $\alpha_1 > \alpha > \alpha_2 > \beta$ mit (1) und (2) entsprechend. Es besteht keine Wandieraurichtung noch o.g. Symmetrieebene. Es ist bei ruhendem Medium $\delta\beta_1 < \delta\alpha_1 < 0$ und $\delta\beta_2 < 0 < \delta\alpha_1$ und damit $F_z(\Delta\beta_1)F_z(\delta\beta_2) < F_z(\Delta\alpha_1)F_z(\delta\alpha_2)$ nach (9).

Unter der Voraussetzung $|\delta\alpha_k| > |\varphi_{\alpha k}|$ bleibt bei Strömung für den "W"-Schallweg $1 \rightarrow 2$ $\Delta\alpha_1 < 0$, $d\Delta\alpha_1 > 0$,

mit (9) dF>0 und damit $F_f(\Delta\alpha_1)>F_Z(\Delta\alpha_1)$. Für den "V"-Schallweg bleibt $\Delta\beta_1<0$, $d\Delta\beta_1>0$, mit (9) dF>0 und damit $F_f(\Delta\beta_1)>F_Z(\Delta\beta_1)$.

Für den "W"-Schallweg 2→1 bleibt $\Delta\alpha_2>0$ (wegen Vorzeichen von v), $d\Delta\alpha_2<0$ und mit (9) dF>0 und damit $F_f(\Delta\alpha_2)>F_Z(\Delta\alpha_2)$. Für den "V"-Schallweg, bleibt $\Delta\beta_2<0$, $d\Delta\beta_2<0$, mit dF<0 dann $F_f(\Delta\beta_2)<F_Z(\Delta\beta_2)$.

Das bedeutet, daß das "W"-Signal bei ruhendem Medium mit $F_Z<1$ abgestrahlt wird und mit zunehmender Strömung in beiden Meßrichtungen Abstrahlwinkel mit $F_f>F_Z$ wirksam werden, damit nimmt die Amplitude des "W"-Anteils zu. Die Amplitude des "V"-Anteils wird in Stromabwärtsrichtung größer, in der Gegenrichtung kleiner, ist aber schon bei v=0 kleiner als bei a). Da bei Strömung beide "W"-Amplituden zunehmen, je nach $F(\delta\alpha_1)$ und $F(\delta\alpha_2)$ bzw. nach (10) in verschiedenem Maß kann neben der Kompensierung von $D_{12}>D_{21}$ auch der Unterschied zur Nutzsignalamplitude bei ruhendem Medium gering gehalten werden. Dadurch wird sowohl eine Symmetrisierung der beiden Laufzeitsignale bei Strömung erreicht, als auch eine konstante Amplitude über den Strömungsbereich. Durch die "Aufwertung" beider "W"-Signale bei gleichzeitig stärker unterdrücktem "V"-Signal kann eine bessere Auswertbarkeit des "W"-Signals erreicht werden. Das Verlassen des Prinzips der symmetrischen Anordnung der Wandler führt hier zu einer Symmetrisierung und Konstanz der Ultraschallsignale bei Strömung. Im Idealfall gilt dann bei günstig gewählten $\alpha_k$

$$F_f(\Delta\alpha_1)F(\delta\alpha_2)D_{12}(v_f) \approx \underbrace{F_Z(\delta\alpha_1)F(\delta\alpha_2)D(0)}_{} \approx \underbrace{F_f(\Delta\alpha_2)F(\delta\alpha_1)D_{21}(v_f)}_{} \qquad (14)$$
$$\underbrace{\phantom{F_f(\Delta\alpha_1)F(\delta\alpha_2)D_{12}(v_f)}}_{\text{stromabwärts max.}} \quad \text{ruhendes Medium} \quad \text{stromaufwärts max.}$$

Der Verzicht auf eine maximal mögliche Amplitude bei ruhendem Medium wie bei Anordnung a) ist nur ein scheinbarer Nachteil, der durch die nahezu gleichbleibende Nutzsignalamplitude über den Strömungsbereich und die verbesserte "V"-Unterdrükkung bei b) und c) mehr als wett gemacht wird, da die Auswertbarkeit bei maximaler Strömungsgeschwindigkeit entscheidend ist. Eine Wandleranordnung nach c) sollte in der Praxis die besten Resultate liefern.

## 4. Praktische Betrachtungen

Die Richtcharakteristik für einen typischen, praxisgerechten Wandler wird experimentell ermittelt. Die analytische Beschreibung beruht auf Besselfunktionen. Eine Naherung soll deshalb für praktische Betrachtungen ausreichen. Diese Näherung für die Richtungsfunktion F wird abschnittsweise beschrieben mit

$$F = \frac{\sin x}{x} \text{ für } x = 12,1 * \vartheta \text{ im Bogenmaß für } |\vartheta| < 14,1°$$

$$F \approx 0.055 \text{ für } |\vartheta| \geq 14.1° \qquad (15)$$

und erfüllt für $|\vartheta|<14,1°$ die Bedingungen nach (10).

a) Aufeinander ausgerichtete Wandler

Für alle aufgeführten Anordnungen sei h= 20 mm, r= 7,5 mm, sowie c= 340 m/s und v= 15 m/s. Es sei $D_{12}(v_f)=-1$ dB und $D_{21}(v_f)= -0.1$ dB. Weitere, für beide Richtungen gleiche Verluste sind hier vernachlassigt.

Für diese Anordnung sei $\alpha=\alpha_1=\alpha_2= 30°$, damit nach /4/ $\beta= 18,2°$ und $L_m= 161$ mm. Bei ruhendem Medium wird das "W" mit 0 dB Verlust übertragen, das "V" mit -24,6 dB (Störabstand "W"/"V" 24,6 dB). Bei voller Strömung wird $\varphi_\alpha=1,3°$ und $\varphi_\beta=0,8°$ (Es sei $\varphi_{\epsilon1}\approx\varphi_{\epsilon2}$). Das "W" wird stromab mit -1 dB-0,1 dB=-1,1 dB und stromauf mit -0,2 dB übertragen, das "V" stromab mit -22,3 dB und stromauf mit -27,6 dB. Damit ergibt sich stromab 21,2 dB Störabstand, stromauf 27,4 dB und ein Pegelunterschied zwischen Stromauf-und Stromabsignal bei maximalem Fluß von 0,9 dB, maximal zur Nullströmung 1,1 dB.

b) Axial versetzte Wandler (Fig. 3).

Daten wie oben, jedoch $L_m=171$ mm, damit $\alpha=28,5°$ und $\beta=17,2°$ nach (1) und (2) und $\delta\alpha_k=-1,5°$ und $\delta\beta_k=-12,8°$. Bei ruhendem Medium wird das "W" mit -0,3 dB und das "V" mit -32 dB übertragen, damit ein Störabstand von 31,7 dB. Bei voller Strömung wird $\varphi_\alpha=1,2°$ und $\varphi_\beta=0,75°$. Dann wird das "W" stromab mit -1,15 dB, stromauf mit -0,75 dB übertragen, das "V" stromab mit -30,1 dB, stromauf mit -36.4 dB. Es ergibt sich ein Störabstand stromab von 28,95 dB und stromauf 35,65 dB. Gegenüber a) bedeutet dies bei ruhendem Medium über 7 dB mehr Störabstand, stromab ca. 7 dB und stromauf ca. 8 dB mehr Störabstand. Der Pegelunterschied Stromauf-Stromab beträgt 0,4 dB, maximal zur Nullströmung 0,85 dB.

c) Gegeneinander verkippte Wandler (Fig 4).

Daten wie oben, jedoch $L_m= 161$ mm, $\alpha_1=35°$, $\alpha_2=28°$ und nach (1) und (2) $\alpha=29,95°$ und $\beta=18,15°$. Damit wird $\delta\alpha_1=-5,05°$, $\delta\alpha_2=+1,95°$, $\delta\beta_1=-16,85°$, $\delta\beta_2=-9,85°$. Bei ruhendem Medium wird das "W" mit -2 dB, das "V" mit -33 dB übertragen. $\delta\beta_1$ liegt jedoch schon im als konstant definierten Winkelbereich nach (15). Der Störabstand beträgt 31 dB. Bei maximaler Strömung wird $\varphi_\alpha$=1,3° und $\varphi_\beta$=0,8°. Das "W" wird stromab mit -2,15 dB und das "V" mit -34 dB übertragen, stromauf das "W" mit -1,8 dB, das "V" mit -34,1 dB. Damit ergibt sich ein Störabstand stromab von 31,85 dB, stromauf 32,3 dB. Gegenüber a) bringt diese Anordnung bei ruhendem Medium 7 dB mehr Störabstand, stromab mehr als 9 dB, stromauf fast 5 dB mehr. Der Pegelunterschied Stromauf-Stromab beträgt 0,35 dB, der maximale Unterschied zur Nullströmung 0,2 dB.

Die Fig. 3 zeigt die Verhältnisse an einem praktisch ausgeführten Ultraschall-Durchflußmesser gemäß der Variante mit versetzten Wandlern. Mit 101 und 102 sind die den Wandlern 11 und 12 an sich entsprechenden Wandler der Ausführung nach Fig. 3 bezeichnet. Die Abstrahlflächen sind die Flächen 111 und 112. Gestrichelt ist in Fig. 3 der nicht versetzte Wandler 12 der Fig. 1 dargestellt, woraus der erfindungsgemäß vorgesehene Versatz augenfällig wird. Der W-förmige Strahlweg ist mit 121 und der V-förmige parasitäre Weg mit 122 bezeichnet.

Da die Wandler 101 und 102 im Winkel zur Rohrachse so wie beim Beispiel der Fig. 1 angeordnet sind, d.h. diesbezüglich auf den Versatz keine Rücksicht genommen ist, ist die Abstrahlung und ist der Empfang bei den Wandlern 101 und 102 bezüglich (auch) des W-förmigen Weges nicht orthogonal zur jeweiligen Abstrahlfläche. Dies ist ein wesentlicher Punkt der Erfindung.

Die durch die Strömung v des Mediums bewirkte Strahlverwehung des vom Wandler 101 effektiv zur Wirkung kommenden abgestrahlten Ultraschallstrahls hat nicht die aus der Fig. 3 hervorgehende Abweichung von der Orthogonalen der Abstrahlfläche 111. Es kommt ein mit geringerem Winkel gegenüber der Orthogonalen abgestrahlter Strahl effektiv zur Wirkung. Intensitätsmäßig ist dieser Strahl stärker als der im Winkel mehr von der Orthogonalen abweichende (bei ruhendem Medium jedoch effektiv zur Wirkung kommende) Ultraschallstrahl. Dies beruht auf der Intensitätsverteilung der Strahlung innerhalb der relativ scharf gebündelten Strahlungskeule des Wandlers 101. Sinngemäß entsprechendes gilt für den versetzten Wandler 102 und seine Richtungen, diese bezogen auf die Orthogonale der Wandlerfläche 112. Dasjenige, was bezüglich der Abstrahlintensität in Abhängigkeit vom Winkel gilt, gilt auch für die Empfangsempfindlichkeit.

Die Strahlverwehung führt hier also beim stromauf liegenden Sendewandler 101 zu einer Intensitätsvergrößerung der Abstrahlung und beim empfangenden Wandler 102 zu einer Steigerung der Empfangsempfindlichkeit. Beim Empfangswandler 102 ist der der Orthogonalen aufgrund der Verwehung bezüglich des Winkels näher liegende Strahl der effektiv wirksamere Empfangsstrahl mit entsprechend höherer Empfangsempfindlichkeit.

Hinsichtlich der Intensitätsbilanz ist natürlich bei der Erfindung die am Empfangswandler empfangene Intensität geringer bis höchstens maximal gleich der Empfangsintensität am Empfangswandler der Anordnung nach Fig. 1 (für den Fall, daß keine Verwehung auftritt, d.h. für ruhendes Medium oder sehr großen Geschwindigkeitsunterschied). Die vorgesehene Winkelabweichung liegt im Bereich bei 1,5° bzw. von 2° bis 6°.

Gegenüber der Anordnung nach Fig. 1 liegt der Vorzug der Erfindung darin, daß hier die Abstrahlintensität und die Empfangsempfindlichkeit unter dem Einfluß der Strömung für den W-förmigen Weg begünstigt wird und für den parasitären V-förmigen Weg bei der erfindungsgemäßen Anordnung nach Fig. 3 vermindert sind, d.h. daß sich ein günstigeres Störabstandsverhältnis zwischen Empfangssignal des W-förmigen Weges und des V-förmigen, parasitären Weges ergibt.

Die Fig. 4 zeigt die für die zweite Alternative mit "verkippten" Wandlern bestehenden Verhältnisse an einem praktischen Ausführungsbeispiel. Mit 201 und 202 sind die den Wandlern 11 und 12 an sich entsprechenden mit diesen bauartgleichen Wandler der Ausführung nach Fig. 4 bezeichnet. Die Abstrahlflächen sind wiederum die Flächen 111 und 112. Gestrichelt ist die Lage der Abstrahl- bzw. Empfangsflächen von nach dem Stand der Technik nicht verkippt oder gedreht angeordneten Wandlern 11 und 12 der Fig. 1 dargestellt, womit augenfällig wird, wie das erfindungsgemäße "Verkippen" der Ausführungsform der Fig. 4 zu verstehen ist. Der W-förmige Strahlweg ist mit 21 bezeichnet, da er dem Strahlweg 21 der Fig. 1 gleich ist. Der "V"-förmige parasitäre Weg ist mit 22 bezeichnet.

Beim Ausführungsbeispiel der Fig. 4 ist der stromauf positionierte Wandler 201 gegenüber der Position des Wandlers 11 in einem vergleichsweise zum Winkel Alpha (= a) des W-förmigen Strahlweges flacheren Winkel zur Rohrwand 5 angeordnet. D.h., daß die Orthogonale der Fläche 111 des Wandlers 201 mit einem gegenüber dem Winkel Alpha größeren Winkel $\alpha_1$ in den Rohrinnenraum hinein zeigt. Die Fig. 4 läßt dies deutlich erkennen. Für den stromab positionierten Wandler 202 ist die Verkippung entgegengesetzt gewählt, d.h. die Orthogonale der Fläche 112 des Wandlers 102 ist in flacherem Winkel $\alpha_2$ als dem Winkel Alpha in den Rohrinnenraum gerichtet.

Diese Winkelstellungen der Wandler 201 und 202 ergeben, daß die der Darstellung der Fig. 4 nach den W-förmigen Weg ergebende ausgesandte/empfangene Strahlung in einem Winkel von einigen Grad (etwa 2 bis 6°) von der Orthogonalen der Fläche 111 abweichend gebildet wird. Wegen der Strahlverwehung in Bezug auf den Wandler 201 kommt jedoch effektiv ein kleinerer abweichender Winkel in Betracht, d.h. innerhalb der Strahlungskeule der Fläche 111 ist tatsächlich eine Winkelrichtung der Ausstrahlung wirksam, die näher der Orthogonalen, d.h. näher dem Intensitätsmaximum der Ausstrahlung liegt. Die Strahlverwehung im Bereich des stromabliegenden Wandlers 202 führt zu einer Intensitätsverbesserung dadurch, daß effektiv ein der Orthogonalen im Winkel näher liegender Strahl wirksam ist, als dies die Fig. 4 ohne Berücksichtigung einer Strahlverwehung zeigt. Natürlich ist auch beim Ausführungsbeispiel der Fig. 4 die Sendeintensität/Empfangsempfindlichkeit für den verwehten Strahl nicht höher als die jeweils maximale Intensität innerhalb der Strahlungskeule, z.B. wie die bei der Fig. 1 bei Strömungsgeschwindigkeit Null wirksam werdende Intensität/Empfindlichkeit der Wandler. Daß auch bei der Erfindungsvariante der Fig. 4 der Betrieb der Ultraschallstrecke 21 zwischen stromauf befindlichem Wandler 201 und stromab befindlichem Wandler 202 nicht mit maximaler Strahlungs-/Empfangsintensität der Wandler durchgeführt wird ist kein praktischer Verlust. Wesentlich wichtiger ist, daß mit zunehmender Strömung durch Verwehung keine störende Schwächung der Meßempfindlichkeit für diese Richtung der Ultraschallstrecke 21 eintritt, nämlich damit kein wesentlicher Intensitätsunterschied zwischen den beiden zur Auswertung zu bringenden Auswertesignalen, d.h. zwischen dem Auswertesignal der Messung "stromab" und der Messung "stromauf".

Von besonderem Vorteil ist es, die vorliegende Erfindung bei einem Durchflußmesser mit einem Meßrohr 1 mit rechtförmigem Querschnitt entsprechend der Beschreibungseinleitung bzw. entsprechend der parallelen Anmeldung anzuwenden. Eine solche Querschnittsform des Meßrohrs ermöglicht es zusammen mit angepaßt bemessenen Wandlern eine solche homogene Ultraschall-Durchstrahlung des Meßrohrquerschnitts H . B entlang dem W-förmigen Weg zu erzielen, daß jeweils der ganze Strömungsquerschnitt des Gases bzw. der Flüssigkeit von der Messung erfaßt ist. Besonders günstig ist es, ein H:B-Verhältnis zwischen 5:1 bis 6:1 zu wählen. Z.B. für Gas für einen Meßbereich von 5 ltr/h bis 30 cbm/h eignet sich eine Abmessung H mit 30 mm und eine Abmessung B mit 5 bis 6 mm um zuverlässig genaue Mengenmessungen durchzuführen. Mit elektronischer Nachkorrektur kann die untere Meßgrenze sogar bis auf 1 ltr/h herabgesetzt werden.

## Patentansprüche

1. Ultraschall-Durchflußmesser mit einem gas-/flüssigkeitsdurchströmten Meßrohr (1) und mit Ultraschall-Sende-/Empfangswandlern (101,102), die für einen W"-förmigen Ultraschallweg (121) mit im Meßrohr (1) vorgesehenen mehrfachen Reflexionen plaziert in einem axialen Abstand voneinander an ein und derselben Seitenwand (5) des Meßrohrs (1) angebracht sind, wobei die Orthogonale der Abstrahl- bzw. Empfangsflächen (111, 112) dieser Wandler vorgebbare Winkel ($\alpha_1$, $\alpha_2$) mit der Seitenwand (5) des Meßrohrs (1) bilden, wobei mit diesem Durchflußmesser aus Messungen in und entgegen der Strömungsrichtung ein Differenzsignal für die volumenmäßige Durchströmung zu erhalten ist,
   **gekennzeichnet dadurch,**
   daß die Wandler (101,102) in einem solchen Abstand voneinander bei Beibehaltung der Winkelausrichtung ($\alpha_1$, $\alpha_2$) der Orthogonalen ihrer Abstrahl-bzw. Empfangsflächen (111, 112) zur Seitenwand (5) so angeordnet sind, daß sich, bezüglich des sich damit ergebenden W-förmigen Weges (121) für den Winkel ($\alpha$) zwischen der geometrischen Abstrahl-/Empfangsrichtung der Wandler (101, 102) und der Seitenwand (5) des Meßrohrs (1) ein um das Winkelmaß ($\delta\alpha_1,\delta\alpha_2$) flacherer Winkel ($\alpha$) ergibt, als es der Winkel ($\alpha_1$, $\alpha_2$) der Orthogonalen ist.

2. Durchflußmesser nach Anspruch 1,
   **gekennzeichnet dadurch,**
   daß das Winkelmaß ($\delta\alpha_1,\delta\alpha_2$) etwa 2° bis etwa 6° beträgt.

3. Durchflußmesser nach Anspruch 1,
   **gekennzeichnet dadurch,**
   daß das Winkelmaß ($\delta\alpha_1,\delta\alpha_2$) etwa 1,5° beträgt.

4. Ultraschall-Durchflußmesser mit einem gas-/flüssigkeitsdurchströmten Meßrohr (1) und mit Ultraschall-Sende-/Empfangswandlern (201,202) die für einen W-förmigen Ultraschallweg (21) mit im Meßrohr (1) vorgesehenen mehrfachen Reflexionen plaziert in einem axialen Abstand voneinander an ein und derselben Seitenwand (5) des Meßrohrs (1) angebracht sind, wobei diese Wandler (201, 202) in einem vorgegebenen Abstand (Lm) voneinander angeordnet sind und sich bei auf die Abstrahl- bzw. Empfangsflächen (111, 112) der beiden Wandler (201, 202) im Winkel ($\alpha$) zur Achse der vorgesehenen Strömung (v) mittigem Auftreffen der beiden Enden dieses W-förmigen Weges (21) ein damit festgelegt vorgegebener W-förmiger Ultraschallweg (21) ergibt,
wobei mit diesem Durchflußmesser aus Messungen in und entgegen der Strömungsrichtung ein Differenzsignal für die volumenmäßige Durchströmung zu erhalten ist,
**gekennzeichnet dadurch,**
daß die beiden Wandler (201,202) in dieser Seitenwand (5) mit der Orthogonalen ($O_1$, $O_2$) ihrer Abstrahlbzw. Empfangsfläche (111, 112) gegenüber der Ausrichtung der Enden dieses vorgegebenen "W"-förmigen Ultraschallweges (21) der vorgesehenen Strömung (v) um eine jeweilige geringe Winkelabweichung ($\delta\alpha_1,\delta\alpha_2$) entgegengerichtet gedreht ausgerichtet sind.

5. Durchflußmesser nach Anspruch 4,
   **gekennzeichnet dadurch,**
   daß die jeweilige Winkelabweichung ($\delta\alpha_1,\delta\alpha_2$) etwa 2° bis etwa 6° beträgt.

6. Ultraschall-Durchflußmesser nach Anspruch 1, 2 oder 3 und nach Anspruch 4 oder 5,
   **gekennzeichnet dadurch,**
   daß die Wandler derart im Abstand voneinander angeordnet sind, daß sich für den damit ergebenden W-förmigen Weg der flachere Winkel ($\alpha$) ergibt und außerdem diese beiden Wandler derart angeordnet sind, daß die Orthogonale ihrer jeweiligen Abstrahl- bzw. Empfangsfläche (111, 112) der Strömung entgegengerichtet gedreht ist.

7. Durchflußmesser nach einem der Ansprüche 1 bis 6 mit einem Meßrohr (1) mit rechteckigem Querschnitt.

8. Durchflußmeser nach Anspruch 7,
   **gekennzeichnet dadurch,**
   daß der Rechteckquerschnitt mit H:B zu größer 2:1 bis 15:1 bemessen ist.

9. Durchflußmeser nach Anspruch 6,
   **gekennzeichnet dadurch,**
   daß der Rechteckquerschnitt mit H:B zu größer 5:1 bis 6:1 bemessen ist.

## Claims

1. Ultrasound flowmeter having a measuring tube (1) through which gas/liquid flows and having ultrasound transmitting/receiving transducers (101, 102) which are fitted at an axial distance from one another on one and the same side wall (5) of the measuring tube (1), positioned for a "W"-shaped ultrasound path (121) with multiple reflections provided in the measuring tube (1), the orthogonals of the emitting and receiving surfaces (111, 112) of these transducers forming angles ($\alpha_1$, $\alpha_2$), which can be predetermined, with the side wall (5) of the measuring tube (1), it being possible to obtain a difference signal for the volumetric flow from measurements in and against the flow direction using this flowmeter, characterized in that the transducers (101, 102) are arranged at such a distance from one another, while maintaining the angular alignment ($\alpha_1$, $\alpha_2$) of the orthogonals of their emitting and receiving surfaces (111, 112) with respect to the side wall (5) such that, with respect to the W-shaped path (121) which hence results for the angle ($\alpha$), an angle ($\alpha$) is produced between the geometric emitting/receiving direction of the transducers (101, 102) and the side wall (5) of the measuring tube (1), which angle ($\alpha$) is flatter by the angular size ($\delta\alpha_1$, $\delta\alpha_2$) than is the angle ($\alpha_1$, $\alpha_2$) of the orthogonals.

2. Flowmeter according to Claim 1, characterized in that the angular size ($\delta\alpha_1,\delta\alpha_2$) is approximately 2° to approximately 6°.

3. Flowmeter according to Claim 1, characterized in that the angular size ($\delta\alpha_1$, $\delta\alpha_2$) is approximately 1.5°.

4. Ultrasound flowmeter having a measuring tube (1) through which gas/liquid flows and having ultrasound transmitting/receiving transducers (201, 202) which are fitted at an axial distance from one another on one and the same side wall (5) of the measuring tube (1), positioned for a "W"-shaped ultrasound path (21) with multiple reflections provided in the measuring tube (1), these transducers (201, 202) being arranged at a predetermined distance (Lm) from one another and, with the two ends of this W-shaped path (21) impinging centrally on the emitting and receiving surfaces (111, 112) of the two transducers (201, 202) at an angle ($\alpha$) with respect to the axis of the intended flow (v), a predetermined W-shaped ultrasound path (21), which is defined thereby, being produced, it being possible to obtain a difference signal for the volumetric flow from measurements in and against the flow direction using this flowmeter, characterized in that the two transducers (201, 202) are aligned rotated in opposite directions through a respective small angular deviation ($\delta\alpha_1$, $\delta\alpha_2$) in this side wall (5) with the orthogonals ($O_1$, $O_2$) of their emitting and receiving surface (111, 112) with respect to the alignment of the ends of this predetermined "W"-shaped ultrasound path (21) of the intended flow (v).

5. Flowmeter according to Claim 4, characterized in that the angular deviation ($\delta\sigma_1$, $\delta\alpha_2$) is approximately 2° to approximately 6°.

6. Ultrasound flowmeter according to Claim 1, 2 or 3 and according to Claim 4 or 5, characterized in that the transducers are arranged at a distance from one another in such a manner that the flatter angle ($\alpha$) is produced for the W-shaped path produced in this manner and, in addition, these two transducers are arranged in such a manner that the orthogonal of their respective emitting and receiving surface (111, 112) is rotated in the opposite direction to the flow.

7. Flowmeter according to one of Claims 1 to 6 having a measuring tube (1) with a rectangular cross-section.

8. Flowmeter according to Claim 7, characterized in that the rectangular cross-section is dimensioned with H:B to be greater than 2:1 to 15:1.

9. Flowmeter according to Claim 6, characterized in that the rectangular cross-section is dimensioned with H:B to be greater than 5:1 to 6:1.

## Revendications

1. Débitmètre à ultrasons comportant un tube de mesure (1) parcouru par un gaz et/ou un liquide et des transducteurs d'émission/réception d'ultrasons (101, 102), qui sont disposés, pour un trajet en forme de "W" (121) des ultrasons avec des réflexions multiples prévues dans le tube de mesure (1), à distance axiale l'un de l'autre sur une seule et même paroi latérale (5) du tube de mesure (1), les normales aux surfaces d'émission et de réception (111, 112) de ces transducteurs faisant des angles ($\alpha_1$, $\alpha_2$), pouvant être prescrit, avec la paroi latérale (5) du tube de mesure (1), un signal différentiel du débit volumique pouvant être obtenu par ce débitmètre à partir de mesures effectuées dans la direction d'écoulement et en sens opposé,
caractérisé par le fait que les transducteurs (101, 102) sont disposés, tout en conservant l'orientation angulaire ($\alpha_1$, $\alpha_2$) des normales à leurs surfaces d'émission et de réception (111, 112) par rapport à la paroi latérale (5), à une distance l'un de l'autre telle que, par rapport au trajet en forme de W (121), que l'on obtient de ce fait, on obtienne pour l'angle ($\alpha$) entre la direction géométrique d'émission/réception des transducteurs (101, 102) et la paroi latérale (5) du tube de mesure (1), un angle ($\alpha$), plus plat de la valeur angulaire ($\delta\alpha_1$, $\delta\alpha_2$), que l'angle ($\alpha_1$, $\alpha_2$) des normales.

2. Débitmètre suivant la revendication 1, caractérisé par le fait que la valeur angulaire ($\delta\alpha_1$, $\delta\alpha_2$) est comprise entre environ 2° et environ 6°.

3. Débitmètre suivant la revendication 1, caractérisé par le fait que la valeur angulaire ($\delta\alpha_1$, $\delta\alpha_2$) est égale à environ 1,5°.

4. Débitmètre à ultrasons comportant un tube de mesure (1) parcouru par un gaz/un liquide, et des transducteurs d'émission/de réception d'ultrasons (201, 202), qui sont disposés, pour un trajet en forme de W (21) des ultrasons avec de multiples réflexions prévues dans le tube de mesure (1), à distance axiale l'un de l'autre sur une seule et même paroi latérale (5) du tube de mesure (1), ces transducteurs (201, 202) étant à une distance (Lm) l'un de l'autre prescrite et on obtient un trajet en forme de W (21) des ultrasons, qui est de ce fait prescrit de façon fixe, lorsque les deux extrémités de ce trajet (21) en forme de W rencontrent en position centrée les surfaces d'émission et de réception (111, 112) des deux transducteurs (201, 202) en faisant l'angle ($\alpha$) avec l'axe de l'écoulement (v) prévu, ce débitmètre permettant d'obtenir un signal différentiel pour le débit volumique à partir de mesures effectuées dans le sens d'écoulement et en sens opposé, caractérisé par le fait que les deux transducteurs (201, 202), dans cette paroi latérale (5), ont leurs normales ($O_1$, $O_2$) à leurs surfaces d'émission et de réception (111, 112) tournées chacune en sens opposé de l'écoulement prévu (v) d'un faible écart angulaire respectif ($\delta\alpha_1$ $\delta\alpha_2$) par rapport à la direction des extrémités de ce trajet (21) prescrit en forme de "W" des ultrasons.

5. Débitmètre suivant la revendication 4, caractérisé par le fait que chaque écart angulaire ($\delta\alpha_1$, $\delta\alpha_2$) est compris entre environ 2° et environ 6°.

6. Débimètre à ultrasons suivant la revendication 1, 2 ou 3 et suivant la revendication 4 ou 5, caractérisé par le fait que les transducteurs sont disposés à une distance l'un de l'autre telle que pour le trajet en forme de W ainsi obtenu forme, on obtient l'angle ($\alpha$) le plus plat et qu'en outre ces deux transducteurs sont disposés de sorte que les normales à leurs surfaces respectives d'émission et de réception (111, 112) sont tournées en sens opposé de l'écoulement.

7. Débitmètre suivant l'une des revendications 1 à 6 comportant un tube de mesure (1) de section transversale rectangulaire.

8. Débitmètre suivant la revendication 7, caractérisé par le fait que la section transversale rectangulaire est telle que H:B soit supérieur à 2:1 en allant jusqu'à 15:1.

9. Débitmètre suivant la revendication 6, caractérisé par le fait que la section transversale rectangulaire est telle que H:B supérieur à 5:1 en allant jusqu'à 6:1.

FIG 1

# FIG 2

# FIG 3

# FIG 4